# EUROPEAN PATENT APPLICATION

(11) **EP 4 439 770 A1**
(43) Date of publication of application: **02.10.2024**
(21) Application number: 22897011.7
(22) Date of filing: 23.03.2022
(51) Int. Cl.: H01M 10/0585, H01M 10/0525, B65H 16/02, B65H 35/00

(54) **POLE PIECE CUTTING AND CONVEYING DEVICE AND LAMINATION SYSTEM**

(30) Priority: 25.11.2021 CN 202111412120
(71) Applicant: SVOLT ENERGY TECHNOLOGY CO., LTD, Changzhou, Jiangsu 213200 (CN)
(72) Inventor: ZHAO, Kai, hangzhou, Jiangsu 213200 (CN); YIN, Dongxing, hangzhou, Jiangsu 213200 (CN); XU, Chunlong, hangzhou, Jiangsu 213200 (CN); QIN, Jie, hangzhou, Jiangsu 213200 (CN); WANG, Xuefei, hangzhou, Jiangsu 213200 (CN); WANG, Xuan, hangzhou, Jiangsu 213200 (CN)
(74) Representative: M. Zardi & Co S.A.
(86) International application number: PCT/CN2022/082513
(87) International publication number: WO 2023/092910

(57) **Abstract**

This application relates to the field of lithium battery production equipment, especially to a pole piece cutting-conveying apparatus and a stacking system. The pole piece cutting-conveying apparatus comprises a pole piece unwinding mechanism, a pole piece cutting mechanism and a pole piece conveying mechanism which are arranged in sequence; the pole piece cutting mechanism cuts a pole piece strip unwound by the pole piece unwinding mechanism to obtain pole pieces; the pole piece conveying mechanism comprises an annular infeed track and a plurality of conveying trolleys; the annular infeed track comprises an infeed segment and a return segment which are attached to one another end-to-end, the end-to-end-attached positions of the infeed segment and the return segment are respectively act as an infeed station and a outfeed station, and each of the conveying trolleys is able to pick up a pole piece at the infeed station and release it at the outfeed station. The stacking system comprises said pole piece cutting-conveying apparatus. The pole piece cutting-conveying apparatus and the stacking system carry out pick-up, convey and release of the pole pieces by the conveying trolleys such that there is little conveying deviation and less conveying processes, so as to carry out cutting, conveying and stacking of the pole pieces efficiently and precisely.

## Description

### CROSS-REFERENCE TO RELATED APPLICATION

This application claims priority to Chinese patent application No. 2021114121209 filed on November 25, 2021 entitled "Pole Piece Cutting-conveying Apparatus and Stacking System", the disclosure of which is hereby incorporated by reference in its entirety.

### TECHNICAL FIELD

The present application relates to the field of lithium battery production equipment, especially to a pole piece cutting-conveying apparatus and a stacking system.

### BACKGROUND

Square stacking technology is one of the lithium battery production technologies, the capacity and cell production cost of the production line of lithium battery are directly determined by the speed and accuracy of the stacking technology.

The current stacking apparatuses have relatively low stacking speed and thus require a large number of apparatuses in order to meet the capacity, causing a large footprint, high purchase and maintenance costs as well as a high energy consumption which results in poor energy-saving.

### SUMMARY

An object of the present application is to provide a pole piece cutting-conveying apparatus and a stacking system to solve, to a certain extent, the technical problem of the extremely low stacking speed of the stacking apparatuses in prior arts.

A pole piece cutting-conveying apparatus is provided by the present application which comprises a pole piece unwinding mechanism, a pole piece cutting mechanism and a pole piece conveying mechanism which are arranged in sequence;
the pole piece cutting mechanism is configured to perform a cutting process of a pole piece strip unwound by the pole piece unwinding mechanism to obtain pole pieces;
the pole piece conveying mechanism comprises an annular infeed track and a plurality of conveying trolleys;
the annular infeed track comprises an infeed segment and a return segment which are attached to one another end-to-end, the end-to-end-attached positions of the infeed segment and the return segment respectively act as an infeed station and a outfeed station, and the plurality of conveying trolleys are moveable from the infeed station to the outfeed station through the infeed segment as well as from the outfeed station to the infeed station through the return segment, such that each of the conveying trolleys is able to pick up a pole piece at the infeed station and release it at the outfeed station.

Further, in the above technical solution, the pole piece cutting-conveying apparatus further comprises defect detection mechanisms, which are arranged between the pole piece cutting mechanism and the pole piece unwinding mechanism for detecting surface quality of the pole piece strip;
the annular infeed track further comprises a rejection segment both ends of which are attached to the middle of the infeed segment and the middle of the return segment, respectively;
the defect detection mechanisms are electrically connected to the conveying trolleys to determine whether the surface qualities of the pole pieces carried by the conveying trolleys are acceptable;
the conveying trolleys move the pole pieces to the rejection segment and release them at this position when the qualities of the pole pieces carried thereon are determined unacceptable;
the conveying trolleys move the pole pieces to the outfeed station when the qualities of the pole pieces carried thereon are determined acceptable.

Further, in any one of the above technical solutions, the pole piece cutting mechanism comprises a clamping plate assembly and a cutting tool;
the clamping plate assembly comprises a first clamping plate and a second clamping plate which are oppositely spaced apart, the first clamping plate and the second clamping plate are moveable toward and away from each other so as to grip and release a free end of the pole piece strip;
the cutting tool is arranged on a side of the clamping plate assembly which is close to the pole piece unwinding mechanism, so as to cut the pole piece strip during the gripping of the pole piece strip carried out by the clamping plate assembly to obtain the pole pieces;
the clamping plate assembly is configured to be able to reciprocally move along a delivery direction of the pole piece strip so as to release the pole pieces when the pole piece strip is cut and move toward the pole piece unwinding mechanism as well as grip the uncut pole piece strip and pull it toward the infeed station.

Further, in any one of the above technical solutions, the pole piece cutting-conveying apparatus further comprises a deviation correction mechanism which is arranged between the pole piece cutting mechanism and the pole piece unwinding mechanism for detecting unwinding trajectory deviation of the pole piece strip;
the deviation correction mechanism is electrically connected to the pole piece unwinding mechanism to adjust position of the pole piece unwinding mechanism according to the unwinding trajectory deviation.

Further, in any one of the above technical solutions, the plurality of conveying trolleys are arranged on the annular infeed track in a magnetic levitation manner, and/or
the pole piece conveying mechanism further comprises an infeed roller which is spaced apart from the infeed station to form an infeed opening therebetween, said infeed roller is able to drive the pole pieces into the infeed opening.

The present application further provides a stacking system which comprises the pole piece cutting-conveying apparatus according to any one of the above technical solutions.

Further, in any one of the above technical solutions, there are two pole piece cutting-conveying apparatuses which are configured to convey positive pole pieces and negative pole pieces, respectively;
the stacking system further comprises a stacking track and a stacking mechanism;
both ends of the stacking track are positioned below outfeed stations of said two pole piece cutting-conveying apparatuses, respectively, and the stacking mechanism is able to reciprocally move between the outfeed stations of said two pole piece cutting-conveying apparatuses along the stacking track such that said two pole piece cutting-conveying apparatuses alternately stack the positive pole pieces and the negative pole pieces onto the stacking mechanism at the ends of the stacking track.

Further, in any one of the above technical solutions, the stacking mechanism comprises a stacking platform and a pressing plate;
at least one stacking station is provided on the stacking platform and all of the stacking stations are corresponded to the conveying trolleys of the outfeed stations one by one when the stacking platform is moved to an end of the stacking track so as to place the pole pieces released by the conveying trolleys on all of the stacking stations one by one correspondingly;
the pressing plate and the stacking platform are moveably connected so as to get out of the way of the pole pieces when they are released by the conveying trolleys and move to pressing the pole pieces toward the stacking platform after they are placed on the stacking stations.

Further, in any one of the above technical solutions, both ends of the stacking track each forms a climbing segment extending along an up-down direction, such that the conveying trolleys stack the pole pieces to the stacking mechanism at the climbing segments;
the distance between an upper end and a lower end of each of the climbing segments is not less than a target stacking thickness.

Further, in any one of the above technical solutions, a diaphragm unwinding mechanism comprises an unwinding roller and a pulling roller, said unwinding roller and said pulling roller are configured to stretch and draw a diaphragm;
the unwinding roller is positioned between said two pole piece cutting-conveying apparatuses and the pulling roller is positioned on said stacking mechanism, such that the pulling roller is reciprocally moved along with the stacking platform.

The present application has the following beneficial effects in compare with the prior arts.

The pole piece cutting-conveying apparatus comprises a pole piece unwinding mechanism, a pole piece cutting mechanism and a pole piece conveying mechanism which are arranged in sequence. The pole piece cutting mechanism is configured to perform a cutting process of a pole piece strip unwound by the pole piece unwinding mechanism to obtain pole pieces; the pole piece conveying mechanism comprises an annular infeed track and a plurality of conveying trolleys; the annular infeed track comprises an infeed segment and a return segment which are attached to one another end-to-end, the end-to-end-attached positions of the infeed segment and the return segment respectively act as an infeed station and a outfeed station, and the plurality of conveying trolleys are moveable from the infeed station to the outfeed station through the infeed segment as well as from the outfeed station to the infeed station through the return segment, such that each of the conveying trolleys is able to pick up a pole piece at the infeed station and release it at the outfeed station.

The pole piece cutting-conveying apparatus, therefore, is able to convey a plurality of pole pieces by determined tracks by means of a plurality of conveying trolleys on a one-to-one basis, enabling high conveying efficiency, a fixed-point release with high pole piece release position accuracy, short conveying process, less accumulated deviation and high rotation accuracy, such that a stacking system to which the pole piece cutting-conveying apparatus is applied has extremely high stacking efficiency and stacking accuracy.

As a result, the stacking system comprises the aforementioned pole piece cutting-conveying apparatus is able to achieve all the beneficial effects of said pole piece cutting-conveying apparatus.

### BRIEF DESCRIPTION OF THE DRAWINGS

In order to more clearly explain the specific embodiments of the present application or the technical solutions in the prior arts, the following is a brief description of the accompanying drawings which will be used in describing the specific embodiments or the prior arts. It should be apparent that the accompanying drawings in the following description are some embodiments of the present application only and those of ordinary skill in the art can obtain other drawings based on these drawings without any creative effort.
Fig. 1 is a schematic structure view of a stacking system provided by a second embodiment of the present application;
Fig. 2 is a partial enlarged view of portion A in Fig. 1;
Fig. 3 is a partial enlarged view of portion B in Fig. 1;
Fig. 4 is a schematic structure view of a stacked product of the stacking system provided by the second embodiment of the present application.

### List of reference numerals

1- stacking system; 10- positive pole piece cutting-conveying apparatus; 100- positive pole piece strip; 101- defect detection mechanism; 102- cutting tool; 103- clamping plate assembly; 1030-first clamping plate; 1031- second clamping plate; 104- annular infeed track; 1040- infeed segment; 1041- return segment; 1042- rejection segment; 105- positive pole piece unwinding mechanism; 106- conveying trolley; 107- positive pole piece; 11- negative pole piece cutting-conveying apparatus; 110- negative pole piece strip; 111- negative pole piece unwinding mechanism; 112-negative pole piece; 12- diaphragm unwinding mechanism; 120- unwinding roller; 121- pulling roller; 122- diaphragm; 13- stacking track; 130- first climbing segment; 131- second climbing segment; 14- stacking mechanism.

### DETAILED DESCRIPTION OF EMBODIMENTS

Technical solutions of the present application will be clearly and completely described below in conjunction with the accompanying drawings; the described embodiments are apparently parts rather than all of the embodiments of the present application. All other embodiments that obtained by those of ordinary skill in the art based on the embodiments of the present application without any creative effort are also within the scope of the present application.

It should be noted that the orientations or positional relationships indicated by the terms such as "central", "upper", "lower", "left", "right", "vertical", "horizontal", "inner", "outer" and the like are based on the orientations or positional relationships shown in the drawings, they are only intended for ease of description of the present application and simplicity of description rather than indicate or imply that the mentioned apparatuses or elements must have the particular orientations as well as being configured and operated in the particular orientations, and thus should not be construed as limiting of the present application. In addition, the terms "first", "second" and "third" are for the purpose of description only and should not be regarded as an indication or implication of relative importance.

In the description of the present application, it should also be noted that the terms "installed", "joined" and "connected" should be construed broadly unless otherwise specified or defined; for example, they may be construed as fixedly connected, detachably connected or integrally connected; mechanically connected or electrically connected; directly joined or joined with an intermediate media or joined by interiors of two elements. Those of ordinary skill in the art may understand the particular meanings of the above terms in the present application based on the particular circumstances.

### First Embodiment

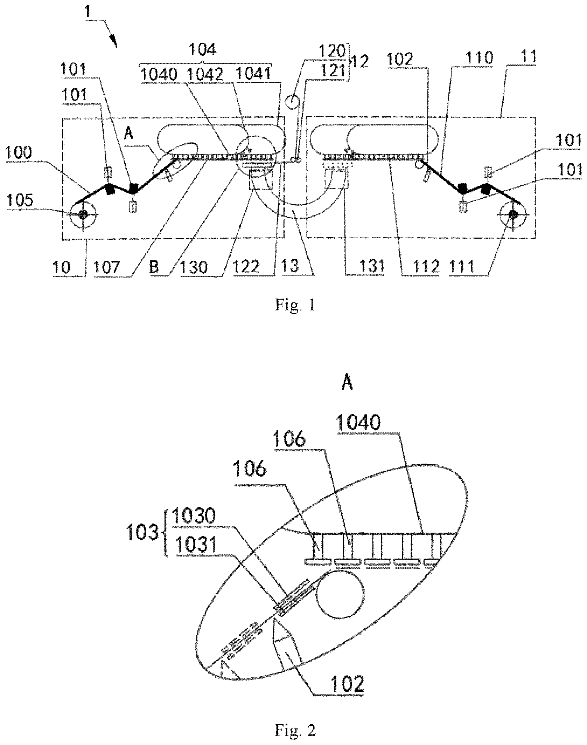

With reference to Figs. 1-4, an embodiment of the present application provides a pole piece cutting-conveying apparatus which comprises a pole piece unwinding mechanism, a pole piece cutting mechanism and a pole piece conveying mechanism arranged in sequence, wherein "arranged in sequence" means sequentially arranging along an unwinding direction, i.e., the direction in which a pole piece strip is delivered, such that the pole piece strip unwound by the pole piece unwinding mechanism is delivered first to the pole piece cutting mechanism and then to the pole piece conveying mechanism.

The pole piece cutting mechanism is configured to perform a cutting process of the pole piece strip unwound by the pole piece unwinding mechanism to obtain pole pieces. Wherein the pole piece unwinding mechanism may adopt existing devices having pole piece unwinding function, for example, the pole piece unwinding mechanism may comprise a discharge roller and a driving roller and the discharge roller is conventionally made of steel, having a 3-9 inches outer diameter as well as an inflatable and tightening function, one end is fixed to a vertically arranged device large plate and another end is suspended or being supported by a moveable or fixed support; one end of the pole piece strip to be unwound is wrapped around the discharge roller and another end thereof is a free end which is intended to be frictional connected with the driving roller to drive the pole pieces by friction and pull out the strip from the discharge roller by cooperating with an active rotation of the discharge roller, the coefficient of friction between the driving roller and the pole pieces is 0.1 to 0.8, and the unwinding linear speed is 5-100 m/min. Further, the pole piece cutting mechanism is able to cut the free end of the pole piece strip segment by segment based on predetermined sizes, such that the pole piece strip is cut into pole pieces while being delivered toward the pole piece cutting mechanism with a cutting efficiency of 80-400 pieces/min and a 60-600 mm length for each cut pole piece.

The pole piece conveying mechanism comprises an annular infeed track 104 and a plurality of conveying trolleys 106. Wherein, optionally, the number of conveying trolleys 106 is ten-sixteen, the annular infeed track 104 comprises a linear track portion and an arc-shaped track portion, and the arc-shaped track portion has a diameter of 50-300 mm and the linear track portion has a length of 3-10 m.

The annular infeed track 104 comprises an infeed segment 1040 and a return segment 1041 which are attached to one another end-to-end, and the end-to-end-attached positions of the infeed segment 1040 and the return segment 1041 respectively act as an infeed station and an outfeed station.

The plurality of conveying trolleys 106 are able to pick up the pole pieces at the infeed station and move from the infeed station to the outfeed station through the infeed segment 1040, such that the plurality of conveying trolleys 106 are able to carry the pole pieces from the infeed station to the outfeed station through the infeed segment 1040.

The plurality of conveying trolleys 106 are able to release the pole pieces at the outfeed station to carry out the stacking process. The conveying trolleys 106 become empty conveying trolleys 106 after the pole pieces are released, i.e., become empty conveying trolleys 106 at the outfeed station.

The plurality of conveying trolleys 106 are able to move from the outfeed station to the infeed station through the return segment 1041, such that the controlled conveying trolleys 106 are returned from the outfeed station to the infeed station through the return segment 1041 for picking up new cut pole pieces. The cycle repeats, so as to continuously and stably pick up, convey and release the pole pieces.

Optionally, the pole piece conveying mechanism further comprises an infeed roller which is spaced apart from the infeed station to form an infeed opening therebetween, said infeed roller is able to drive the pole pieces into the infeed opening to increase success rate of picking up the pole pieces by the conveying trolleys 106.

Optionally, the infeed segment 1040 has a linear shape and the return segment 1041 has a C-shape to reduce difficulty of turning of the conveying trolleys 106 and thus improve efficiency of the conveying trolleys 106 returning from the outfeed station to the infeed station.

In this embodiment, the conveying trolleys 106 each comprises a pick-up plate and a pick-up driving member. The pick-up plate is formed with a positioning recess matching with a pole piece to confine the pole piece inside the positioning recess; the pick-up driving member acts inside the positioning recess to enable pick-up of the pole piece for example according to the principle of electrostatic adsorption or vacuum adsorption.

Optionally, the plurality of conveying trolleys 106 are arranged on the annular infeed track 104 in a magnetic levitation manner, such that it is possible to improve start-stop accuracy and speed regulation accuracy of the conveying trolleys 106.

In an optional solution of this embodiment, the pole piece cutting-conveying apparatus further comprises defect detection mechanisms 101, which are arranged between the pole piece cutting mechanism and the pole piece unwinding mechanism for detecting surface quality of the pole piece strip to determine whether the surface qualities of the pole pieces delivered to the pole piece conveying mechanism are acceptable. Wherein the surface qualities of the pole piece strip may be determined by the occurrence of white spots, material dropping or foil leakage and the like on the surface.

In addition, as shown in Fig. 1, the defect detection mechanisms 101 may be the devices having surface defect detection function in prior arts, for example the defect detection mechanisms 101 may carry out image detection for both side faces of the pole piece strip by means of linear array cameras or plane array cameras.

In this embodiment, in order to avoid the phenomenon that the pole piece strip becomes deviated in the pole piece unwinding mechanism during the unwinding process and thus avoid deflection of the pole pieces at the release position of the outfeed station, a deviation correction mechanism is arranged between the pole piece cutting mechanism and the pole piece unwinding mechanism so as to detect unwinding trajectory deviation of the pole piece strip. Wherein the deviation correction mechanism may adopt existing devices having deviation correction function, for example, the deviation correction mechanism may comprise a position sensor configured to detect the position of an edge of the pole piece strip to determine, based on the detection result of the position sensor, whether a left-side or right-side deviation of the pole piece strip is occurred.

The deviation correction mechanism is electrically connected to the pole piece unwinding mechanism to adjust position of the pole piece unwinding mechanism according to the unwinding trajectory deviation. Specifically, if the pole piece strip has a right-side deviation, the pole piece unwinding mechanism is moved to the left; if the pole piece strip has a left-side deviation, the pole piece unwinding mechanism is moved to the right, therefore achieve the purpose of correct the deviation of the position of the pole piece strip.

Optionally, to ensure the timeliness of the deviation correction of the pole piece strip carried out by the deviation correction mechanism, the deviation correction mechanism is arranged close to the pole piece unwinding mechanism in relation to the pole piece cutting mechanism.

In the optional solution of the present application, a rejection of the pole pieces whose surface qualities are unacceptable is required in order to avoid mixing up of the unacceptable pole pieces with the acceptable pole pieces, so as to ensure that the surface qualities of all of the pole pieces released at the outfeed station are acceptable. Therefore, the annular infeed track 104 further comprises a rejection segment 1042 both ends of which are attached to the middle of the infeed segment 1040 and the middle of the return segment 1041, respectively, such that the conveying trolleys 106 are able to move back to the middle of the return segment 1041 from the middle of the infeed segment 1040 directly through the rejection segment 1042.

It should be noted that the middle of the infeed segment 1040 and the middle of the return segment 1041 are not necessarily the absolute midpoints of the two along their length directions, but some points on the infeed segment 1040 and the return segment 1041 between the infeed station and the outfeed station, specific locations of which may be selected and adjusted based on actual needs.

The defect detection mechanisms 101 are electrically connected to the conveying trolleys 106, that is to say, the defect detection mechanisms 101 are able to communicate with the conveying trolleys 106 in a direct or indirect way as well as a wired or wireless way to determine whether the surface qualities of the pole pieces carried by the conveying trolleys 106 are acceptable, and thus provide a basis for the selection of the travel directions of the conveying trolleys 106 at the intersection of the infeed segment 1040 and the rejection segment 1042.

The conveying trolleys 106 move the pole pieces to the rejection segment 1042 and release them at this position when the qualities of the pole pieces carried thereon are determined unacceptable. Optionally, waste recovery mechanisms are arranged beside the rejection segment 1042 to recover the rejected pole pieces released at the rejection segment 1042 by the conveying trolleys 106, so as to facilitate centralized treatment of the rejected pole pieces. The waste recovery mechanisms may be waste recovery boxes or waste recovery cars and the like.

The conveying trolleys 106 move the pole pieces over the rejection segment 1042 to the outfeed station when the qualities of the pole pieces carried thereon are determined acceptable, so as to ensure that all the pole pieces delivered to the outfeed station are the ones having the acceptable surface qualities.

By arranging said rejection segment 1042, it not only maintains the pole pieces at relative small conveying deviations without elongate their conveying distances, but also omits the need for adding a belt rejection mechanism and thus effectively reducing the size of the apparatus. Further, the fact that the rejection process could be done without elongate the conveying distances of the pole pieces effectively improves the conveying efficiency of the pole pieces.

In the optional solution of the present application, in order to improve the cutting efficiency and the delivery efficiency of the pole pieces into the infeed opening, the pole piece cutting mechanism comprises a clamping plate assembly 103 and a cutting tool 102, the cutting tool 102 may optionally be a metal cutting tool, a ceramics cutting tool, a laser cutting tool and the like, which is not limited herein.

The clamping plate assembly 103 comprises a first clamping plate 1030 and a second clamping plate 1031 which are oppositely spaced apart, the first clamping plate 1030 and the second clamping plate 1031 are moveable toward and away from each other so as to grip and release the free end of the pole piece strip, specifically, the first clamping plate 1030 and the second clamping plate 1031 are respectively arranged to face opposite side faces of the pole piece strip.

The cutting tool 102 is arranged on a side of the clamping plate assembly 103 which is close to the pole piece unwinding mechanism, so as to cut the free end of the pole piece strip during the gripping of the pole piece strip carried out by the clamping plate assembly 103 to obtain the pole pieces. As a result, the clamping and positioning action on the pole piece strip provided by the clamping plate assembly 103 is able to improve the stability of the cutting tool 102 when applying cutting force, an thus improve cutting accuracy of the pole pieces.

The clamping plate assembly 103 is configured to be able to reciprocally move along the delivery direction of the pole piece strip so as to release the pole pieces when the pole piece strip is cut and move toward the pole piece unwinding mechanism as well as grip the uncut pole piece strip and pull it toward the infeed station, and by repeatedly doing so cutting of the pole pieces can be carried out continuously by means of the cooperation of the clamping plate assembly 103 and the cutting tool 102.

Optionally, the clamping plate assembly 103 further comprises a mounting seat and a driving cylinder (not shown), the driving cylinder is joined to the mounting seat and is able to drive it to move reciprocally, and the first clamping plate 1030 and the second clamping plate 1031 are moveably connected to the mounting seat such that the first clamping plate 1030 and the second clamping plate 1031 are able to move toward and away from each other.

### Second Embodiment

A second embodiment provides a stacking system which comprises the pole piece cutting-conveying apparatus in the first embodiment. The technical features of the pole piece cutting-conveying apparatus disclosed in the first embodiment are also applicable for this embodiment and thus will not be repeated herein.

With reference to Figs. 1-4, in an optional solution of this embodiment, there are two pole piece cutting-conveying apparatuses, a positive pole piece cutting-conveying apparatus 10 and a negative pole piece cutting-conveying apparatus 11, respectively, wherein the positive pole piece cutting-conveying apparatus 10 comprises a positive pole piece unwinding mechanism 105 which is configured for conveying a positive pole piece strip 100 such that it is cut by the pole piece cutting mechanism to obtain positive pole pieces 107, and the negative pole piece cutting-conveying apparatus 11 comprises a negative pole piece unwinding mechanism 111 which is configured for conveying a negative pole piece strip 110 such that it is cut by the pole piece cutting mechanism to obtain negative pole pieces 112.

In this embodiment, the stacking system 1 further comprises a stacking track 13 and a stacking mechanism 14.

Both ends of the stacking track 13 are positioned below outfeed stations of said two pole piece cutting-conveying apparatuses, respectively, and the stacking mechanism 14 is able to reciprocally move between the outfeed stations of said two pole piece cutting-conveying apparatuses along the stacking track 13 such that said two pole piece cutting-conveying apparatuses alternately stack the positive pole pieces 107 and the negative pole pieces 112 onto the stacking mechanism 14 at the ends of the stacking track 13, so as to achieve alternating stacking of the positive pole pieces 107 and the negative pole pieces 112.

In this embodiment, the stacking mechanism 14 comprises a stacking platform and a pressing plate.

At least one stacking station is provided on the stacking platform is moveably connected to the stacking track 13 as well as reciprocally moveable between the outfeed stations of said two pole piece cutting-conveying apparatuses along the stacking track 13, all of the stacking stations are corresponded to the conveying trolleys 106 of the outfeed stations one by one when the stacking platform is moved to an end of the stacking track 13 so as to place the pole pieces released by the conveying trolleys 106 on all of the stacking stations one by one correspondingly. Wherein simultaneous stacking of multiple sets of pole pieces can be achieved when there are multiple stacking stations, so as to further improve stacking efficiency.

The pressing plate is moveably connected to the stacking platform so as to get out of the way of the pole pieces when they are released by the conveying trolleys 106 and move to pressing the pole pieces toward the stacking platform after they are placed on the stacking stations, it is possible to keep the stacked pole pieces in place with the aid of the pressing plate to avoid shift, deformation or collapse of the stacked pole pieces during the reciprocal movement of the stacking platform, with a benefit of improving stacking accuracy.

Optionally, the pressing plate is moveably connected to the stacking platform. More specifically, the pressing plate is liftably or telescopically arranged to the stacking platform.

In this embodiment, each end of the stacking track 13 forms a climbing segment extending along an up-down direction, such that the conveying trolleys 106 stack the pole pieces to the stacking mechanism 14 at the climbing segments. More specifically, a first climbing segment 130 is formed by an end of the stacking track 13 corresponding to the positive pole piece cutting-conveying apparatus 10 and a second climbing segment 131 is formed by an end of the stacking track 13 corresponding to the negative pole piece cutting-conveying apparatus 11, the distance between an upper end and a lower end of each of the first climbing segment 130 and the second climbing segment 131 is not less than a target stacking thickness to ensure that a next layer of pole piece can always be continuously stacked on top of the stacked parts after each stay of the stacking platform at the first climbing segment 130 and the second climbing segment 131.

In this embodiment, a diaphragm unwinding mechanism 12 comprises an unwinding roller 120 and a pulling roller 121, said unwinding roller 120 and said pulling roller 121 are configured to stretch and draw a diaphragm 122.

The unwinding roller 120 is positioned above said two pole piece cutting-conveying apparatuses and the pulling roller 121 is positioned between said two pole piece cutting-conveying apparatuses, so as to ensure that there is no spatial interference between the diaphragm 122 and said two pole piece cutting-conveying apparatuses when the diaphragm 122 is reciprocally moved with the stacking platform.

Optionally, said stacking system further comprises existing post-processing devices such as gluing mechanism, heat pressing mechanism, weighing and inspecting mechanism and unloading mechanism and the like, wherein the stacked products which having unacceptable weights can be rejected in the unloading mechanism.

As mentioned above, stacking steps of said stacking system are as follow.

Cut and convey the positive pole pieces 107 by means of the positive pole piece cutting-conveying apparatus 10 and cut and convey the negative pole pieces 112 by means of the negative pole piece cutting-conveying apparatus 11.

Carry the positive pole pieces 107 by means of at least one conveying trolley 106 at the outfeed station of the positive pole piece cutting-conveying apparatus 10, move the stacking platform to the first climbing segment 130 along the stacking track 13 and make it stay at a position on the first climbing segment 130 in which the pressing plate is leveled with the positive pole pieces 107 carried by the at least one conveying trolley 106, at the same time correspond the positions of the at least one conveying trolley 106 to at least one stacking station of the stacking platform one by one, respectively.

Move away the pressing plate to cover the diaphragm 122 above the pressing plate on top of the previous layer of negative pole piece 112, expose top portions of all of the stacked parts at all of the stacking stations toward the conveying trolleys 106, and release the positive pole pieces 107 by at least one conveying trolley 106 to accurately stack at least one positive pole piece 107 on at least one stacking station one-to-one, then press and position all of the stacked parts at all of the stacking stations by means of the pressing plate.

As such, the stacking of one layer of positive pole piece 107 is completed, the stacking platform then moves to the second climbing segment 131 along the stacking track 13, during which the diaphragm 122 is pulled and in the meantime covering top of the pressing plate. The pressing plate then moves away in order to cover top of the previous layer of positive pole piece 107 with the diaphragm 122 and then conduct the stacking process of a next layer of negative pole piece 112. As such, this layer of negative pole piece 112 is separated from the previous layer of positive pole piece 107 by the diaphragm 122, specific stacking steps of this layer of negative pole piece 112 are identical to that of the previous layer of positive pole piece 107 and thus will not be repeated herein.

After finish the stacking process of this layer of negative pole piece 112, the stacking platform moves back to the first climbing segment 130 along the stacking track 13 to carry out stacking operation of a next layer of positive pole piece 107. The cycle repeats until finish the stacking process to obtain multiple sets of stacked products, i.e., cells.

After complete stacking, each stacking station is placed with a set of stacked products, and any layers of diaphragms of all of the stacked products are connected together. In order to separate multiple sets of stacked products, the diaphragms between adjacent stacking stations, i.e., adjacent stacked products may be cut to obtain multiple sets of independent stacked products.

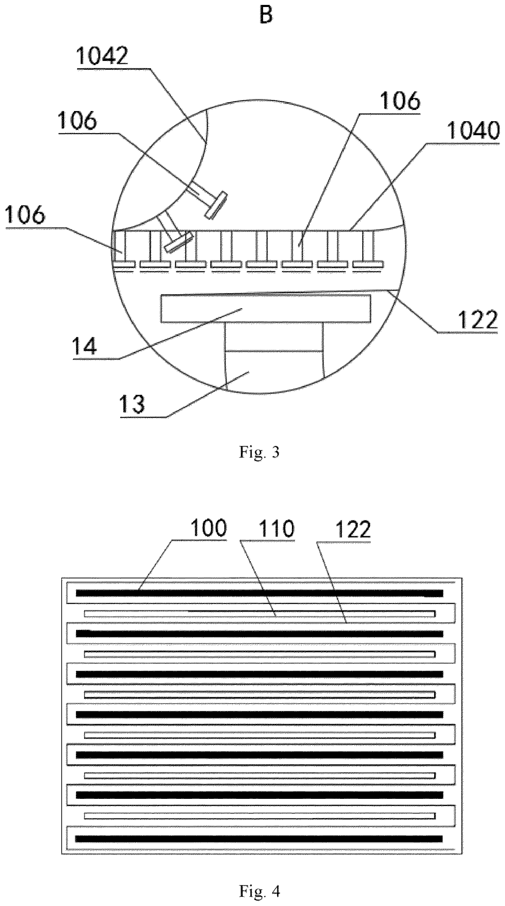

During the above-mentioned stacking process, as shown in Figure 4, if there is no strict requirement for stacking efficiency, only one set of pole pieces may be stacked on the stacking platform at a time. In the case that stacking multiple sets of pole pieces on the stacking platform at the same time, it is not only possible to simultaneously stacking multiple pole pieces but also improve the stacking efficiency. In addition, each pole piece is released, dropped and positioned directly towards each corresponding stacking station, during which there is no need for any conveying manipulator and positioning platform, no poor positioning occurs, less pole piece conveying deviation, higher alignment for each stacking station, and both of the apparatus's availability and stacking yield are significantly improved.

The stacking system in this embodiment has the same advantages as the pole piece cutting-conveying apparatus in the first embodiment, which will not be repeated herein.

Finally, it should be noted that the above embodiments are intended for illustration of the technical solutions of the present application only, rather than limiting the same; although the present application has been described in detail with reference to the foregoing embodiments, those of ordinary skill in the art should understand that it is still possible to modify the technical solutions recorded in the foregoing embodiments, or to equivalently replace some or all of the technical features therein; these modifications or replacements will not cause the essence of the corresponding technical solutions to depart from the scope of the technical solutions of the embodiments of the present application. Furthermore, those skilled in the art will understand that although some embodiments described herein include certain features included in other embodiments rather than other features, combinations of the features of different embodiments are meant to be within the scope of the present application and form different embodiments. For example, any of the claimed embodiments may be used in any combination. The information disclosed in the Background section is merely intended to enhance the understanding of the general background of the present application and should not be construed as an admission of or in any way implying that the information constitutes the prior art that is already known to those skilled in the art.

### Industrial Applicability

As mentioned above, the present disclosure provides a pole piece cutting-conveying apparatus and a stacking system. The present disclosure conveys a plurality of pole pieces by determined tracks by means of a plurality of conveying trolleys on a one-to-one basis, enabling high conveying efficiency, a fixed-point release with high pole piece release position accuracy, short conveying process, less accumulated deviation and high rotation accuracy, such that the stacking system to which said pole piece cutting-conveying apparatus is applied has extremely high stacking efficiency and stacking accuracy, so as to efficiently and accurately carry out cutting, conveying and stacking.

## Claims

1. A pole piece cutting-conveying apparatus, **characterized in that**, it comprises a pole piece unwinding mechanism, a pole piece cutting mechanism and a pole piece conveying mechanism which are arranged in sequence;
the pole piece cutting mechanism is configured to perform a cutting process of a pole piece strip unwound by the pole piece unwinding mechanism to obtain pole pieces;
the pole piece conveying mechanism comprises an annular infeed track and a plurality of conveying trolleys;
the annular infeed track comprises an infeed segment and a return segment which are attached to one another end-to-end, the end-to-end-attached positions of the infeed segment and the return segment respectively act as an infeed station and a outfeed station, and the plurality of conveying trolleys are moveable from the infeed station to the outfeed station through the infeed segment as well as from the outfeed station to the infeed station through the return segment, such that each of the conveying trolleys is able to pick up a pole piece at the infeed station and release it at the outfeed station.

2. The pole piece cutting-conveying apparatus according to claim 1, **characterized in that**, it further comprises defect detection mechanisms, which are arranged between the pole piece cutting mechanism and the pole piece unwinding mechanism for detecting surface quality of the pole piece strip;
the annular infeed track further comprises a rejection segment both ends of which are attached to the middle of the infeed segment and the middle of the return segment, respectively;
the defect detection mechanisms are electrically connected to the conveying trolleys to determine whether the surface qualities of the pole pieces carried by the conveying trolleys are acceptable;
the conveying trolleys move the pole pieces to the rejection segment and release them at this position when the qualities of the pole pieces carried thereon are determined unacceptable;
the conveying trolleys move the pole pieces to the outfeed station when the qualities of the pole pieces carried thereon are determined acceptable.

3. The pole piece cutting-conveying apparatus according to claim 2, **characterized in that**, the pole piece cutting mechanism comprises a clamping plate assembly and a cutting tool;
the clamping plate assembly comprises a first clamping plate and a second clamping plate which are oppositely spaced apart, the first clamping plate and the second clamping plate are moveable toward and away from each other so as to grip and release a free end of the pole piece strip;
the cutting tool is arranged on a side of the clamping plate assembly which is close to the pole piece unwinding mechanism, so as to cut the pole piece strip during the gripping of the pole piece strip carried out by the clamping plate assembly to obtain the pole pieces;
the clamping plate assembly is configured to be able to reciprocally move along a delivery direction of the pole piece strip so as to release the pole pieces when the pole piece strip is cut and move toward the pole piece unwinding mechanism as well as grip the uncut pole piece strip and pull it toward the infeed station.

4. The pole piece cutting-conveying apparatus according to any one of the claims 1 to 3, **characterized in that**, it further comprises a deviation correction mechanism which is arranged between the pole piece cutting mechanism and the pole piece unwinding mechanism for detecting unwinding trajectory deviation of the pole piece strip;
the deviation correction mechanism is electrically connected to the pole piece unwinding mechanism to adjust position of the pole piece unwinding mechanism according to the unwinding trajectory deviation.

5. The pole piece cutting-conveying apparatus according to any one of the claims 1 to 3, **characterized in that**, the plurality of conveying trolleys are arranged on the annular infeed track in a magnetic levitation manner, and/or
the pole piece conveying mechanism further comprises an infeed roller which is spaced apart from the infeed station to form an infeed opening therebetween, said infeed roller is able to drive the pole pieces into the infeed opening.

6. A stacking system **characterized by** comprising the pole piece cutting-conveying apparatus according to any one of the claims 1 to 5.

7. The stacking system according to claim 6, **characterized in that**,
there are two pole piece cutting-conveying apparatuses which are configured to convey positive pole pieces and negative pole pieces, respectively;
the stacking system further comprises a stacking track and a stacking mechanism;
both ends of the stacking track are positioned below outfeed stations of said two pole piece cutting-conveying apparatuses, respectively, and the stacking mechanism is able to reciprocally move between the outfeed stations of said two pole piece cutting-conveying apparatuses along the stacking track such that said two pole piece cutting-conveying apparatuses alternately stack the positive pole pieces and the negative pole pieces onto the stacking mechanism at the ends of the stacking track.

8. The stacking system according to claim 7, **characterized in that**, the stacking mechanism comprises a stacking platform and a pressing plate;
at least one stacking station is provided on the stacking platform and all of the stacking stations are corresponded to the conveying trolleys of the outfeed stations one by one when the stacking platform is moved to an end of the stacking track so as to place the pole pieces released by the conveying trolleys on all of the stacking stations one by one correspondingly;
the pressing plate and the stacking platform are moveably connected so as to get out of the way of the pole pieces when they are released by the conveying trolleys and move to pressing the pole pieces toward the stacking platform after they are placed on the stacking stations.

9. The stacking system according to claim 7, **characterized in that**, both ends of the stacking track each forms a climbing segment extending along an up-down direction, such that the conveying trolleys stack the pole pieces to the stacking mechanism at the climbing segments;
the distance between an upper end and a lower end of each of the climbing segments is not less than a target stacking thickness.

10. The stacking system according to claim 7, **characterized by** further comprising a diaphragm unwinding mechanism which comprises an unwinding roller and a pulling roller, said unwinding roller and said pulling roller are configured to stretch and draw a diaphragm;
the unwinding roller is positioned above said two pole piece cutting-conveying apparatuses and the pulling roller is positioned between said two pole piece cutting-conveying apparatuses.
